# EUROPEAN PATENT APPLICATION

(11) **EP 3 376 774 A1**
(43) Date of publication of application: **19.09.2018**
(21) Application number: 16863374.1
(22) Date of filing: 02.06.2016
(51) Int. Cl.: H04N 21/472

(54) **PLAYBACK CONTROL METHOD AND DEVICE**

(30) Priority: 13.11.2015 CN 201510781067
(71) Applicant: Shenzhen TCL Digital Technology Ltd., Qianhai Shenzhen - Hong Kong Cooperation Zone (CN)
(72) Inventor: LI, Hui, Zone No.1 Liyumen Street Qianwan Road 1 Qianhai Shenzhen-Hong Kong Cooperation Zone Sh (CN)
(74) Representative: Kuhnen & Wacker Patent- und Rechtsanwaltsbüro PartG mbB
(86) International application number: PCT/CN2016/084481
(87) International publication number: WO 2017/080193

(57) **Abstract**

Disclosed is a playback control method that includes: in response to detection of a setting instruction, displaying a first selection interface of one or more determination conditions corresponding to a bad viewing behavior; in response to reception of a first selection instruction trigged by a user based on the first selection interface, loading a playback script associated with the determination condition corresponding to the first selection instruction; and collecting one or more viewing parameters according to the determination condition, and executing a first playback control code in the playback script to play a first reminder message on a television when the one or more viewing parameters satisfy the determination condition. Further disclosed is a playback control device. With this disclosure, the flexibility of television anti-addiction control can be improved.

## Description

### TECHNICAL FIELD

This disclosure relates to the field of television technology, and more particularly relates to a playback control method and device.

### BACKGROUND

With the rapid development of television (TV) technology, smart TV is increasingly becoming an indispensable part of life. While people are enjoying the high-definition visual impact brought by smart TVs, they may likely be addicted in television programs, especially those who are weak in self-control, including infants, children, teenagers, etc. Due to the pressure of work and life, parents usually don't have time to take care of their children, but let the children stay in front of the TV for long periods of time. However, there are many harmful effects for children watching television for a long time. Watching TV for long periods of time may damage their eyesight and hearing. It also has an adverse effect on the children's brain development. In addition, if the children stay too close to the TV screen, the stimulation of the strong light as well as a small amount of microwave radiation emitting from the screen may diminish the adjustment abilities of the ciliary muscle in the children's eye, resulting in myopia or amblyopia.

For the time being, the television solidifies the conditions for determination of bad viewing behaviors (e.g., an excessively long viewing time, an excessively short viewing distance) in the ROM. During playback, the television identifies whether the user's viewing behavior is a bad viewing behavior based on the foregoing determination conditions. Then if there is detected a bad viewing behavior, the television performs preset anti-addiction measures, such as locking the screen, powering off, playing a reminder message, and so on. However, because the foregoing determination conditions and the corresponding anti-addiction measures are all solidified in the ROM, they are often impossible to be modified, or the modification can be very difficult and thus cannot be accomplished by a general user. In the prior art, there is a problem that the television's anti-addiction control is not flexible enough.

### SUMMARY

It is therefore one main object of this disclosure to provide a playback control method and device aiming at improving the flexibility of the television anti-addiction control.

To achieve the above objective, a playback control method provided by this disclosure includes the following operations. In response to detection of a setting instruction, a first selection interface of one or more corresponding conditions for determination of a bad viewing behavior is displayed. Then in response to reception of a first selection instruction triggered by a user based on the first selection interface, a request for retrieval of a playback script associated with the determination condition corresponding to the first selection instruction is sent to a preset script server, and the playback script returned by the script server in response to the retrieval request is stored and loaded. One or more viewing parameters are then collected according to the determination condition. When the viewing parameters satisfy the determination condition, a first playback control code in the playback script is executed so as to play a first reminder message on the television. Or one or more viewing parameters are collected according to the determination condition, and when the viewing parameters collected within a preset time period don't satisfy the determination condition, a second playback control code in the playback script is executed so as to play a second reminder message on the television.

In some embodiments, the playback control method further includes the following operation subsequent to turning off the television: setting the television to not respond to a power-on command triggered by the user within a second predetermined period of time.

There is further provided herein a playback control method that includes the following operations. In response to detection of a setting instruction, a first selection interface of one or more corresponding conditions for determination of a bad viewing behavior is displayed. Then in response to reception of a first selection instruction triggered by a user based on the first selection interface, a playback script associated with a determination condition corresponding to the first selection instruction is loaded. One or more viewing parameters are then collected according to the determination condition. When the viewing parameters satisfy the determination condition, a first playback control code in the playback script is executed so as to play a first reminder message on the television.

In some embodiments, loading the playback script associated with the determination condition corresponding to the first selection instruction in response to reception of the first selection instruction includes the following operations. In response to reception of the first selection instruction triggered by the user based on the first selection interface, a request for retrieval of the playback script associated with the determination condition corresponding to the first selection instruction is sent to a preset script server. The playback script returned by the script server in response to the retrieval request is then stored and loaded.

In some embodiments, loading the playback script associated with the determination condition corresponding to the first selection instruction in response to reception of the first selection instruction further includes the following operations. In response to reception of a first selection instruction triggered by a user based on the first selection interface, a second selection interface of a plurality of first reminder messages associated with the determination condition corresponding to the first selection instruction is displayed. Then in response to reception of a second selection instruction triggered by a user based on the second selection interface, a playback script associated with a first reminder message corresponding to the second selection instruction is loaded.

In some embodiments, the playback script further includes a second playback control code, and the playback control method further includes the following operations subsequent to collecting the one or more viewing parameters according to the determination condition and executing the first playback control code in the playback script when the viewing parameters satisfy the determination condition so as to play the first reminder message on the television. One or more viewing parameters are collected according to the determination condition. Then when the viewing parameters collected within a preset time period don't satisfy the determination condition, the second playback control code in the playback script is executed so as to play a second reminder message on the television.

In some embodiments, the playback control method further includes, subsequent to collecting the viewing parameters according to the determination condition: when the viewing parameters collected within the preset time period still satisfy the determination condition, turning off the television.

In addition, in order to achieve the foregoing objective, this disclosure further provides a playback control device that includes: a display module configured to, in response to detection of a setting instruction, display a first selection interface of one or more corresponding conditions for determination of a bad viewing behavior; a loading module configured to, in response to reception of a first selection instruction triggered by a user based on the first selection interface, load a playback script associated with the determination condition corresponding to the first selection instruction; and an execution module configured to collect one or more viewing parameters according to the determination condition, and execute a first playback control code in the playback script when the viewing parameters satisfy the determination condition, so as to play a first reminder message on the television.

In some embodiments, the loading module is further configured to, in response to reception of a first selection instruction triggered by a user based on the first selection interface, send to a preset script server a request for retrieval of a playback script associated with the determination condition corresponding to the first selection instruction, and store and load the playback script returned by the script server in response to the retrieval request.

In some embodiment, the loading module is further configured to, in response to reception of a first selection instruction triggered by a user based on the first selection interface, display based on the display module a second selection interface of a plurality of first reminder messages associated with the determination condition corresponding to the first selection instruction; and in response to reception of a second selection instruction triggered by the user based on the second selection interface, load the playback script associated with the first reminder message corresponding to the second selection instruction.

In some embodiments, the playback script further includes a second playback control code, the execution module is further configured to perform the following operations, subsequent to executing the first playback control code in the playback script: collecting one or more viewing parameters according to the determination condition; and executing the second playback control code in the playback script when the viewing parameters collected within a preset time period don't satisfy the determination condition, so as to play a second reminder message on the television.

In some embodiments, the execution module is further configured to turn off the television when the viewing parameters collected within the preset time period still satisfy the determination condition.

In accordance with this disclosure, by loading a playback script, the user's viewing behavior is determined as to whether it is a bad viewing behavior, and when the user's viewing behavior is a bad viewing behavior, the playback control code in the playback script will be executed so as to play a reminder message, facilitating the user to terminate his/her bad viewing behavior. Compared with the prior art, the present disclosure can load different playback scripts according to user requirements so as to obtain different functions and reminding methods, thereby improving the flexibility of television anti-addiction control.

### BRIEF DESCRIPTION OF THE ACCOMPANYING DRAWINGS

FIG. 1 is an illustrative flowchart of a first embodiment of a playback control method in accordance with this disclosure.
FIG. 2 is an illustrative functional block diagram of a first embodiment of a playback control device in accordance with this disclosure.

Various implementations, functional features, and advantages of this disclosure will now be described in further detail in connection with some illustrative embodiments and the accompanying drawings.

### DETAILED DESCRIPTION OF ILLUSTRATIVE EMBODIMENTS

It will be understood that the specific embodiments described herein are merely illustrative of the disclosure and are not intended to limit the disclosure.

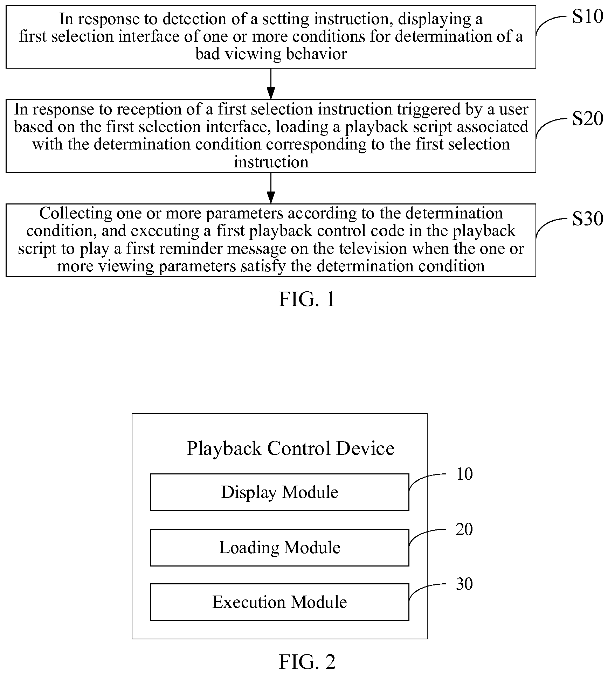

This disclosure provides a playback control method. As illustrated in FIG. 1, in a first embodiment of the playback control method according to this disclosure, the playback control method includes the following blocks S10 to S30.

In S10, in response to detection of a setting instruction, a first selection interface of one or more corresponding conditions for determination of a bad viewing behavior is displayed.

The playback control method provided in this embodiment may be applied to television anti-addiction control. For example, a television may respond to a parent's operation and load different playback scripts, and then collect children's viewing parameters according to the loaded playback scripts during playback. When detecting a bad viewing behavior of a child, the television would output a reminder message thus helping the child correct the bad viewing behavior. The following describes the anti-addiction control for children.

In this embodiment, there is provided a first selection interface that displays one or more corresponding conditions for determination of a bad viewing behavior, whereby a user selects a condition for determination of a bad viewing behavior based on the first selection interface. For example, the determination condition may be: a child is at an excessively short viewing distance. For another example, the determination condition may be: a child is viewing for an excessively long period of time. Specifically, when a setting instruction triggered by a user (such as a parent) having a preset permission based on a setting key preset on the television body or on a remote controller is detected, then the television displays a first selection interface of one or more corresponding conditions for determination of a bad viewing behavior, whereby the user may select a determination condition according to actual needs for the purpose of anti-addiction control of the child's viewing behavior. The playback control method then proceeds to block S20.

In S20, in response to reception of a first selection instruction triggered by a user based on the first selection interface, a playback script associated with a determination condition corresponding to the first selection instruction is loaded.

In this embodiment, different determination conditions are associated with different playback scripts. Each of the playback scripts includes a first playback control code which is configured to play a first reminder message corresponding to the bad viewing behavior. Executing the first playback control code can enable the television to play the first reminder message. For example, the determination condition may be: the child is at a viewing distance of less than 3 meters and the viewing lasts 5 minutes, and the corresponding first reminder message may be: "An animated character tells about the disadvantages of watching television programs at a too short distance". For another example, the determination condition may be: the child's viewing duration is greater than 30 minutes, and the corresponding first reminder message may be: "Tell the child that the time agreed has been reached, and it is a good behavior for a child to keep to the agreement". It is easy to understand that different functions and reminding methods can be implemented by loading different playback scripts. The playback script may be stored locally on the television or may also be stored in the cloud. When required, the playback script that needs to be loaded can be retrieved from the local television or from the cloud. The playback control method then continues to block S30.

In S30, one or more viewing parameters are collected according to the determination condition. When the viewing parameters satisfy the determination condition, a first playback control code in the playback script is executed so as to play a first reminder message on the television.

In this embodiment, one or more corresponding viewing parameters are acquired based on the determination condition. For example, if the determination condition is "the child is at a viewing distance of less than 3 meters and the viewing lasts 5 minutes", then a distance sensor of the television may be utilized to acquire the child's viewing distance, while a timer may be utilized to record the duration within which the child keeps this viewing distance. For another example, if the determination condition is "the child's viewing duration is greater than 30 minutes", then the child's viewing time can be recorded solely by the timer.

After the viewing parameters are acquired, whether the child's viewing behavior is a bad viewing behavior can be identified based on the viewing parameters and the determination condition. For example, if the determination condition is "the child is at a viewing distance of less than 3 meters and the viewing lasts 5 minutes", then when finding the child's viewing distance is 1 meter and the viewing lasts 5 minutes, then the child's viewing behavior would be determined as a bad viewing behavior. For another example, if the determination condition is "the child's viewing duration is greater than 30 minutes", then when finding the child's viewing time is 31 minutes, the child's viewing behavior would be determined as a bad viewing behavior. After determining that the viewing parameters satisfy the determination condition, the first playback control code in the loaded playback script would be executed so as to play the first reminder message corresponding to the bad viewing behavior. For example, when the loaded playback script is a playback script corresponding to an excessively long viewing duration, then the first playback control code in the playback script would be executed so as to play on the television "Child, the agreed time has been reached, and it is an excellent behavior to be a kid who keeps to the agreement".

Hereinafter, a further application of the playback control method according to the above-described first embodiment will be described as follows. The playback control method in this embodiment can be specifically applied to television anti-addiction control.

The parents may first discuss with their child and reach an agreement on a length of time (e.g., 30 minutes) spent watching television for the present time. Then the parents may use a remote controller to select a corresponding playback script for monitoring the child's viewing duration. Once the child is detected by a thermal infrared sensor of the television, a built-in timer of the television would be started to start the timing. When the timer has counted 30 minutes, the corresponding control code in the loaded playback script would then be executed to suspend the current broadcast program played on the television and play a specified animation file used for reminding the viewing duration. The content of this animation file is: "Tell the child that the agreed time has been reached, and it is an excellent behavior to be a child who keeps to the agreement. If the child really wants to watch some more, he/she can negotiate with his/her parents without crying or screaming".

In addition, after negotiating with their child, the parents may decide to allow the child to watch some more time (e.g., 5 minutes). To do so, the parents can trigger a time extension menu through a preset shortcut key on the remote controller and extend the time by 5 minutes. Accordingly, the television would resume the previously broadcast program and temporarily adjust the viewing duration that would trigger the anti-addiction control to 5 minutes, and thus reset the timer to restart the timer.

According to the playback control method provided in this embodiment, by loading a playback script, the user's viewing behavior is determined as to whether it is a bad viewing behavior, and when the user's viewing behavior is a bad viewing behavior, the playback control code in the playback script will be executed so as to play a reminder message, facilitating the user to terminate his/her bad viewing behavior. Compared with the prior art, the present disclosure can load different playback scripts according to user requirements so as to obtain different functions and reminding methods, thereby improving the flexibility of television anti-addiction control.

There is further provided herein a second embodiment of the playback control method on the basis of the first embodiment. In this embodiment, the above-described block S20 includes the following operations.

In response to reception of the first selection instruction triggered by the user based on the first selection interface, a request for retrieval of the playback script associated with the determination condition corresponding to the first selection instruction is sent to a script server.

Then the playback script returned by the script server in response to the retrieval request is stored and loaded.

It should be noted that the script server described in this embodiment is used to store a playback script, which continues to be updated. In this embodiment, the above-described block S10 including the following operations: in response to detection of a setting instruction, displaying a first selection interface of one or more corresponding conditions for determination of a bad viewing behavior based on playback scripts stored in the script server, whereby the user selects different playback scripts based on the various displayed determination conditions; in response to reception of a first selection instruction triggered by the user based on the first selection interface, sending to the script server a request for retrieval of a playback script associated with the determination condition corresponding to the first selection instruction, so that the script server returns the playback script associated with the determination condition corresponding to the first selection instruction in response to the received retrieval request; and storing and loading the playback script that is returned by the script server in response to the retrieval request.

This embodiment can improve the convenience for the user to retrieve the playback script, and the user can update the playback script at any time as needed.

There is further provided herein a third embodiment of the playback control method on the basis of the first embodiment. In this embodiment, the above-described block S20 further includes the following operations.

In response to reception of a first selection instruction triggered by a user based on the first selection interface, a second selection interface of multiple first reminder messages associated with the determination condition corresponding to the first selection instruction is displayed.

Based on the description of the foregoing technical solutions, those skilled in the art should appreciate that different bad viewing behaviors correspond to different determination conditions. On the basis of this, with regard to each bad viewing behavior, the present embodiment further sets multiple different first reminder messages for prompting the child to correct this bad viewing behavior.

Specifically, upon receiving a first selection instruction triggered by a user based on the first selection interface, a second selection interface of multiple first reminder messages associated with the determination condition corresponding to the first selection instruction is displayed. Therein, with respect to the same bad viewing behavior, the difference between the various associated first reminder messages may lie in that each first reminder message corresponds to a different "animated character".

Then in response to reception of a second selection instruction triggered by a user based on the second selection interface, a playback script associated with a first reminder message corresponding to the second selection instruction is loaded.

It is easy to understand that parents can select a first reminder message to be played as needed when the child has a bad viewing behavior. For example, an "animated character "the child likes can be chosen. In this embodiment, upon receiving a second selection instruction triggered by a user based on the second selection interface, a playback script associated with a first reminder message corresponding to the second selection instruction will be loaded.

For example, the first reminder message associated with the loaded playback script may be "the content and voice of the child's favored animated character describing the disadvantages of watching television programs at an excessively short distance". It can be easily appreciated that when the child is at a too short viewing distance, the television would pause the current broadcast and turn to play "the content and voice of the child's favored animated character describing the disadvantages of watching television programs at an excessively short viewing distance. Thus, with the help of his/her parents, the child can happily interact with the television and adjust his/her viewing distance accordingly.

There is further provided herein a fourth embodiment of the playback control method on the basis of any one of the foregoing embodiments. In this embodiment, the playback script further includes a second playback control code, and the playback control method further includes the following operations subsequent to the above-described block S30.

One or more viewing parameters are collected according to the determination condition.

Then when the viewing parameters collected within a preset time period don't satisfy the determination condition, the second playback control code in the playback script is executed so as to play a second reminder message on the television.

It is easy to understand that for child users, when they terminate their bad viewing behavior, encouraging the children who eliminate the bad viewing behavior can facilitate the children to form a good viewing habit. In this embodiment, while playing the above-described first reminder message corresponding to the bad viewing behavior, it is detected whether the user successfully terminates the bad viewing behavior within a preset time period, namely identifying whether the viewing parameters collected within the preset time period satisfy the determination condition. When the viewing parameters collected within the preset time period don't satisfy the determination condition, then it would be determined that the user has terminated his/her bad viewing behavior. For example, the user's bad viewing behavior that is determined may be an excessively short viewing distance. Then when detecting that the user's viewing distance is restored to the normal distance, it is determined that the user has terminated his/her bad viewing behavior. For another example, the user's bad viewing behavior that is determined may be an excessively long viewing duration. Then when detecting that the user stops watching (the user is not detected), it is determined that the user has terminated his/her bad watching behavior.

In this embodiment, after the user has terminated the bad viewing behavior within the preset time period, the second playback control code in the playback script is executed so as to play the second reminder message corresponding to the termination of the bad viewing behavior. For example, the second reminder message may be "You are really a good kid".

In other embodiments, for different bad viewing behaviors, further operations may be performed subsequent to playing the second reminder message which corresponds to the termination of the bad viewing behavior. For example, when the determined bad viewing behavior is an excessively short viewing distance and the user returns to the normal viewing distance (i.e., the bad viewing behavior has been terminated), then the reminder message which corresponds to the termination of the bad viewing behavior would be played, and the previously played program would be resumed after playback of the reminder message is completed.

In this embodiment, after the user terminates his/her bad viewing behavior, a reminder message is played to encourage the user, thereby facilitating the user to establish a good viewing habit.

There is further provided herein a fifth embodiment of the playback control method on the basis of the fourth embodiment. In this embodiment, the playback control method may further include the following operations subsequent to the above-described collecting the viewing parameters according to the determination condition.

When the viewing parameters collected within the preset time period still satisfy the determination condition, the television is turned off.

It is easy to understand that if the user maintains the bad viewing behavior for a long period of time, then the user's eyesight and physical strength may be damaged. For example, it may cause myopia, amblyopia, etc.; these injuries are particularly serious for child users. Therefore, in this embodiment, when the child fails to terminate his/her bad viewing behavior within the preset time period, namely the viewing parameters collected within the preset time period still satisfy the determination condition, then the television would be turned off. The preset time period can be set according to actual needs. For example, the preset time period may be set as 5 minutes in this embodiment.

In other embodiments, in order to prevent the user from restarting the television for watching after the television is turned off thus resulting in damage to the user, the present embodiment can further set the television to not respond to a power-on command triggered by the user within a second predetermined period of time, after the television is turned off.

This disclosure further provides a playback control device. As illustrated in FIG. 2, in a first embodiment of the playback control device according to this disclosure, the playback control device includes a display module 10, a loading module 20, and an execution module 30.

The display module 10 is configured to, in response to detection of a setting instruction, display a first selection interface of one or more corresponding conditions for determination of a bad viewing behavior.

The playback control device provided in this embodiment may be built in and operate in a television, and can be applied to television anti-addiction control. For example, a television may respond to a parent's operation and load different playback scripts, and then collect children's viewing parameters according to the loaded playback scripts during playback. When detecting a bad viewing behavior of a child, the television would output a reminder message thus helping the child correct the bad viewing behavior. The following describes the anti-addiction control for children.

In this embodiment, the display module 10 provides a first selection interface that displays one or more corresponding conditions for determination of a bad viewing behavior, whereby a user selects a condition for determination of a bad viewing behavior based on the first selection interface. For example, the determination condition may be: a child is at an excessively short viewing distance. For another example, the determination condition may be: a child is viewing for an excessively long period of time. Specifically, when a setting instruction triggered by a user (such as a parent) having a preset permission based on a setting key preset on the television body or on a remote controller is detected, then the display module 10 displays on the television a first selection interface of one or more corresponding conditions for determination of a bad viewing behavior, whereby the user may select a determination condition according to actual needs for the purpose of anti-addiction control of the child's viewing behavior.

The loading module 20 is configured to, in response to reception of a first selection instruction triggered by a user based on the first selection interface, load a playback script associated with the determination condition corresponding to the first selection instruction.

In this embodiment, different determination conditions are associated with different playback scripts. Each of the playback scripts includes a first playback control code which is configured to play a first reminder message corresponding to the bad viewing behavior. Executing the first playback control code can enable the television to play the first reminder message. For example, the determination condition may be: the child is at a viewing distance of less than 3 meters and the viewing lasts 5 minutes, and the corresponding first reminder message may be: "An animated character tells about the disadvantages of watching television programs at a too short distance". For another example, the determination condition may be: the child's viewing duration is greater than 30 minutes, and the corresponding first reminder message may be: "Tell the child that the time agreed has been reached, and it is a good behavior for a child to keep to the agreement". It is easy to understand that the loading module 20 can load different playback scripts to implement different functions and reminding methods. The playback script may be stored locally on the television or may also be stored in the cloud. When required, the loading module 20 can retrieve the playback script that needs to be loaded from the local television or from the cloud.

The execution module 30 is configured to collect one or more viewing parameters according to the determination condition, and execute a first playback control code in the playback script when the viewing parameters satisfy the determination condition, so as to play a first reminder message on the television.

In this embodiment, the execution module 30 acquires one or more corresponding viewing parameters based on the determination condition. For example, if the determination condition is "the child is at a viewing distance of less than 3 meters and the viewing lasts 5 minutes", then the execution module may utilize a distance sensor of the television to acquire the child's viewing distance, and utilize a timer to record the duration within which the child keeps this viewing distance. For another example, if the determination condition is "the child's viewing duration is greater than 30 minutes", then the execution module 30 may use solely the timer to record the child's viewing time.

After the viewing parameters are acquired, the execution module 30 identifies whether the child's viewing behavior is a bad viewing behavior based on the viewing parameters and the determination condition. For example, if the determination condition is "the child is at a viewing distance of less than 3 meters and the viewing lasts 5 minutes", then when finding the child's viewing distance is 1 meter and the viewing lasts 5 minutes, then the execution module 30 would determine the child's viewing behavior as a bad viewing behavior. For another example, if the determination condition is "the child's viewing duration is greater than 30 minutes", then when finding the child's viewing time is 31 minutes, the execution module 30 would determine the child's viewing behavior as a bad viewing behavior. After determining that the viewing parameters satisfy the determination condition, the execution module 30 would execute the first playback control code in the loaded playback script so as to play the first reminder message corresponding to the bad viewing behavior. For example, when the loaded playback script is a playback script corresponding to an excessively long viewing duration, then the execution module 30 would execute the first playback control code in the playback script so as to play on the television "Child, the agreed time has been reached, and it is an excellent behavior to be a kid who keeps to the agreement".

Hereinafter, a further application of the playback control device according to the above-described first embodiment will be described as follows. The playback control device in this embodiment is built in and operates in a television, and can be specifically applied to television anti-addiction control.

The parents may first discuss with their child and reach an agreement on a length of time (e.g., 30 minutes) spent watching television for the present time. Then the parents may use a remote controller to select a corresponding playback script for monitoring the child's viewing duration. Once the child is detected by a thermal infrared sensor of the television, a built-in timer of the television would be started to start the timing. When the timer has counted 30 minutes, the corresponding control code in the loaded playback script would then be executed to suspend the current broadcast program played on the television and play a specified animation file used for reminding the viewing duration. The content of this animation file is: "Tell the child that the agreed time has been reached, and it is an excellent behavior to be a child who keeps to the agreement. If the child really wants to watch some more, he/she can negotiate with his/her parents without crying or screaming".

In addition, after negotiating with their child, the parents may decide to allow the child to watch some more time (e.g., 5 minutes). To do so, the parents can trigger a time extension menu through a preset shortcut key on the remote controller and extend the time by 5 minutes. Accordingly, the television would resume the previously broadcast program and temporarily adjust the viewing duration that would trigger the anti-addiction control to 5 minutes, and thus reset the timer to restart the timer.

According to the playback control device provided in this embodiment, by loading a playback script, the user's viewing behavior is determined as to whether it is a bad viewing behavior, and when the user's viewing behavior is a bad viewing behavior, the playback control code in the playback script will be executed so as to play a reminder message, facilitating the user to terminate his/her bad viewing behavior. Compared with the prior art, the present disclosure can load different playback scripts according to user requirements so as to obtain different functions and reminding methods, thereby improving the flexibility of television anti-addiction control.

There is further provided herein a second embodiment of the playback control device on the basis of the first embodiment. In this embodiment, the loading module 20 is further configured to, in response to reception of a first selection instruction triggered by a user based on the first selection interface, send to a preset script server a request for retrieval of a playback script associated with the determination condition corresponding to the first selection instruction, and store and load the playback script returned by the script server in response to the retrieval request.

It should be noted that the script server described in this embodiment is used to store a playback script, which continues to be updated. In this embodiment, in response to detection of a setting instruction, the above-described display module 10 displays a first selection interface of one or more corresponding conditions for determination of a bad viewing behavior based on playback scripts stored in the script server, whereby the user selects different playback scripts based on the various displayed determination conditions. Then in response to reception of a first selection instruction triggered by the user based on the first selection interface, the loading module 20 sends to the script server a request for retrieval of a playback script associated with the determination condition corresponding to the first selection instruction, so that the script server returns the playback script associated with the determination condition corresponding to the first selection instruction in response to the received retrieval request. The loading module 20 then stores and loads the playback script that is returned by the script server in response to the retrieval request.

This embodiment can improve the convenience for the user to retrieve the playback script, and the user can update the playback script at any time as needed.

There is further provided herein a third embodiment of the playback control device on the basis of the first embodiment. In this embodiment, the loading module 20 is further configured to, in response to reception of a first selection instruction triggered by a user based on the first selection interface, display based on the display module a second selection interface of a plurality of first reminder messages associated with the determination condition corresponding to the first selection instruction; and in response to reception of a second selection instruction triggered by the user based on the second selection interface, load the playback script associated with the first reminder message corresponding to the second selection instruction.

Based on the description of the foregoing technical solutions, those skilled in the art should appreciate that different bad viewing behaviors correspond to different determination conditions. On the basis of this, with regard to each bad viewing behavior, the present embodiment further sets multiple different first reminder messages for prompting the child to correct this bad viewing behavior.

Specifically, upon receiving a first selection instruction triggered by a user based on the first selection interface, the loading module 20 displays based on the display module 10 a second selection interface of multiple first reminder messages associated with the determination condition corresponding to the first selection instruction. Therein, with respect to the same bad viewing behavior, the difference between the various associated first reminder messages may lie in that each first reminder message corresponds to a different "animated character".

Then in response to reception of a second selection instruction triggered by a user based on the second selection interface, the loading module 20 loads a playback script which is associated with a first reminder message corresponding to the second selection instruction.

It is easy to understand that parents can select a first reminder message to be played as needed when the child has a bad viewing behavior. For example, an "animated character "the child likes can be chosen. In this embodiment, upon receiving a second selection instruction triggered by a user based on the second selection interface, the loading module 20 loads a playback script associated with a first reminder message corresponding to the second selection instruction.

For example, the first reminder message associated with the loaded playback script may be "the content and voice of the child's favored animated character describing the disadvantages of watching television programs at an excessively short distance". It can be easily appreciated that when the child is at a too short viewing distance, the television would pause the current broadcast and turn to play "the content and voice of the child's favored animated character describing the disadvantages of watching television programs at an excessively short viewing distance. Thus, with the help of his/her parents, the child can happily interact with the television and adjust his/her viewing distance accordingly.

There is further provided herein a fourth embodiment of the playback control device on the basis of any one of the foregoing embodiments. In this embodiment, the playback script further includes a second playback control code, the execution module 30 is further configured to perform the following operations, subsequent to executing the first playback control code in the playback script: collecting one or more viewing parameters according to the determination condition; and executing the second playback control code in the playback script when the viewing parameters collected within a preset time period don't satisfy the determination condition, so as to play a second reminder message on the television.

It is easy to understand that for child users, when they terminate their bad viewing behavior, encouraging the children who eliminate the bad viewing behavior can facilitate the children to form a good viewing habit. In this embodiment, while playing the above-described first reminder message corresponding to the bad viewing behavior, the execution module 30 detects whether the user successfully terminates the bad viewing behavior within a preset time period, namely identifying whether the viewing parameters collected within the preset time period satisfy the determination condition. When the viewing parameters collected within the preset time period don't satisfy the determination condition, then it would be determined that the user has terminated his/her bad viewing behavior. For example, the user's bad viewing behavior that is determined may be an excessively short viewing distance. Then when detecting that the user's viewing distance is restored to the normal distance, it is determined that the user has terminated his/her bad viewing behavior. For another example, the user's bad viewing behavior that is determined may be an excessively long viewing duration. Then when detecting that the user stops watching (the user is not detected), it is determined that the user has terminated his/her bad watching behavior.

In this embodiment, after the user has terminated the bad viewing behavior within the preset time period, the execution module 30 executes the second playback control code in the playback script so as to play the second reminder message corresponding to the termination of the bad viewing behavior. For example, the second reminder message may be "You are really a good kid".

In other embodiments, for different bad viewing behaviors, further operations may be performed subsequent to playing the second reminder message which corresponds to the termination of the bad viewing behavior. For example, when the determined bad viewing behavior is an excessively short viewing distance and the user returns to the normal viewing distance (i.e., the bad viewing behavior has been terminated), then the reminder message which corresponds to the termination of the bad viewing behavior would be played, and the previously played program would be resumed after playback of the reminder message is completed.

In this embodiment, after the user terminates his/her bad viewing behavior, a reminder message is played to encourage the user, thereby facilitating the user to establish a good viewing habit.

There is further provided herein a fifth embodiment of the playback control device on the basis of the fourth embodiment. In this embodiment, the execution module 30 is further configured to turn off the television when the viewing parameters collected within the preset time period still satisfy the determination condition.

It is easy to understand that if the user maintains the bad viewing behavior for a long period of time, then the user's eyesight and physical strength may be damaged. For example, it may cause myopia, amblyopia, etc.; these injuries are particularly serious for child users. Therefore, in this embodiment, when the child fails to terminate his/her bad viewing behavior within the preset time period, namely the viewing parameters collected within the preset time period still satisfy the determination condition, then the execution module 30 would turn off the television. The preset time period can be set according to actual needs. For example, the preset time period may be set as 5 minutes in this embodiment.

In other embodiments, in order to prevent the user from restarting the television for watching after the television is turned off thus resulting in damage to the user, the execution module 30 can further set the television to not respond to a power-on command triggered by the user within a second predetermined period of time, after the television is turned off.

The foregoing description merely portrays some illustrative embodiments according to the disclosure and therefore is not intended to limit the patentable scope of the disclosure. Any equivalent structural or flow transformations that are made taking advantage of the specification and accompanying drawings of the disclosure and any direct or indirect applications thereof in other related technical fields shall all fall in the scope of protection of the disclosure.

## Claims

1. A playback control method, comprising:
in response to detection of a setting instruction, displaying a first selection interface of one or more corresponding conditions for determination of a bad viewing behavior;
in response to reception of a first selection instruction triggered by a user based on the first selection interface, sending to a preset script server a request for retrieval of a playback script associated with the determination condition corresponding to the first selection instruction, and storing and loading the playback script returned by the script server in response to the retrieval request;
collecting one or more viewing parameters according to the determination condition, and executing a first playback control code in the playback script to play a first reminder message on a television when the one or more viewing parameters satisfy the determination condition; and
collecting one or more viewing parameters according to the determination condition, and executing a second playback control code in the playback script to play a second reminder message on the television when the one or more viewing parameters collected within a preset time period don't satisfy the determination condition.

2. The playback control method of claim 1, further comprising, subsequent to collecting the one or more viewing parameters according to the determination condition:
turning off the television when the one or more viewing parameters collected within the preset time period still satisfy the determination condition.

3. The playback control method of claim 2, further comprising, subsequent to turning off the television:
setting the television to not respond to a power-on command triggered by the user within a second predetermined time period.

4. The playback control method of claim 1, wherein the operations of "sending to the preset script server the request for retrieval of the playback script associated with the determination condition corresponding to the first selection instruction in response to reception of the first selection instruction triggered by the user based on the first selection interface, and storing and loading the playback script returned by the script server in response to the retrieval request "are substituted with the following operations:
in response to reception of a first selection instruction triggered by a user based on the first selection interface, displaying a second selection interface of a plurality of first reminder messages associated with the determination condition corresponding to the first selection instruction; and
in response to reception of a second selection instruction triggered by the user based on the second selection interface, loading a playback script associated with one of the plurality of first reminder messages corresponding to the second selection instruction.

5. The playback control method of claim 4, further comprising, subsequent to collecting the one or more viewing parameters according to the determination condition:
turning off the television when the one or viewing parameters collected within the preset time period still satisfy the determination condition.

6. The playback control method of claim 5, further comprising, subsequent to turning off the television:
setting the television to not respond to a power-on command triggered by the user within a second predetermined period of time.

7. A playback control method, comprising:
in response to detection of a setting instruction, displaying a first selection interface of one or more corresponding conditions for determination of a bad viewing behavior;
in response to reception of a first selection instruction triggered by a user based on the first selection interface, loading a playback script associated with the determination condition corresponding to the first selection instruction; and
collecting one or more viewing parameters according to the determination condition, and executing a first playback control code in the playback script to play a first reminder message on a television when the one or more viewing parameters satisfy the determination condition.

8. The playback control method of claim 7, wherein loading the playback script associated with the determination condition corresponding to the first selection instruction in response to reception of the first selection instruction triggered by the user based on the first selection interface comprises:
in response of reception of the first selection instruction triggered by the user based on the first selection interface, sending to a preset script server a request for retrieval of the playback script associated with the determination condition corresponding to the first selection instruction; and
storing and loading the playback script returned by the script server in response to the retrieval request.

9. The playback control method of claim 7, wherein loading the playback script associated with the determination condition corresponding to the first selection instruction in response to reception of the first selection instruction triggered by the user based on the first selection interface further comprises:
in reception of a first selection instruction triggered by a user based on the first selection interface, displaying a second selection interface of a plurality of first reminder messages associated with the determination condition corresponding to the first selection instruction; and
in response to reception of a second selection instruction triggered by the user based on the second selection interface, loading a playback script associated with one of the plurality of first reminder messages that corresponds to the second selection instruction.

10. The playback control method of claim 7, wherein the playback script further comprises a second playback control code, the playback control method further comprising, subsequent to collecting the one or more viewing parameters according to the determination condition and executing the first playback control code in the playback script to play the first reminder message on the television when the one or more viewing parameters satisfy the determination condition:
collecting one or more viewing parameters according to the determination condition; and
executing the second playback control code in the playback script to play a second reminder message on the television when the viewing parameters collected within a preset time period don't satisfy the determination condition.

11. The playback control method of claim 9, wherein the playback script further comprises a second playback control code, the playback control method further comprising, subsequent to collecting the one or more viewing parameters according to the determination condition and executing the first playback control code in the playback script to play the first reminder message on the television when the one or more viewing parameters satisfy the determination condition:
collecting one or more viewing parameters according to the determination condition; and
executing the second playback control code in the playback script to play a second reminder message on the television when the viewing parameters collected within a preset time period don't satisfy the determination condition.

12. The playback control method of claim 10, further comprising, subsequent to collecting the one or more viewing parameters according to the determination condition:
turning off the television when the one or viewing parameters collected within the preset time period still satisfy the determination condition.

13. The playback control method of claim 11, further comprising, subsequent to collecting the one or more viewing parameters according to the determination condition:
turning off the television when the one or viewing parameters collected within the preset time period still satisfy the determination condition.

14. A playback control device, comprising:
a display module configured to, in response to detection of a setting instruction, display a first selection interface of one or more corresponding conditions for determination of a bad viewing behavior;
a loading module configured to, in response to reception of a first selection instruction triggered by a user based on the first selection interface, load a playback script associated with the determination condition corresponding to the first selection instruction; and
an execution module configured to collect one or more viewing parameters according to the determination condition, and execute a first playback control code in the playback script to play a first reminder message on a television when the one or more viewing parameters satisfy the determination condition.

15. The playback control device of claim 14, wherein the loading module is further configured to: in response to reception of the first selection instruction triggered by the user based on the first selection interface, send to a preset script server the request for retrieval of the playback script associated with the determination condition corresponding to the first selection instruction; and store and load the playback script returned by the script server in response to the retrieval request.

16. The playback control device of claim 14, wherein the loading module is further configured to: in response to reception of a first selection instruction triggered by a user based on the first selection interface, display based on the display module a second selection interface of a plurality of first reminder messages associated with the determination condition corresponding to the first selection instruction; and in response to reception of a second selection instruction triggered by the user based on the second selection interface, load a playback script associated with one of the plurality of first reminder messages that corresponds to the second selection instruction.

17. The playback control device of claim 14, wherein the playback script further comprises a second playback control code, and the execution module is further configured to, subsequent to executing the first playback control code in the playback script: collect one or more viewing parameters according to the determination condition; and execute the second playback control code in the playback script to play a second reminder message on the television when the one or more viewing parameters collected within a preset time period don't satisfy the determination condition.

18. The playback control device of claim 16, wherein the playback script further comprises a second playback control code, and the execution module is further configured to, subsequent to executing the first playback control code in the playback script: collect one or more viewing parameters according to the determination condition; and execute the second playback control code in the playback script to play a second reminder message on the television when the one or more viewing parameters collected within a preset time period don't satisfy the determination condition.

19. The playback control device of claim 17, wherein the execution module is further configured to turn off the television when the one or more viewing parameters collected within the preset time period still satisfy the determination condition.

20. The playback control device of claim 18, wherein the execution module is further configured to turn off the television when the one or viewing parameters collected within the preset time period still satisfy the determination condition.
